# DEMANDE DE BREVET EUROPEEN

(11) **EP 2 309 672 A1**
(43) Date de publication de la demande: **13.04.2011**
(21) Numéro de dépôt: 10186440.3
(22) Date de dépôt: 04.10.2010
(51) Int. Cl.: H04L 9/32, H04K 3/00, G06K 19/00, G06K 7/00

(54) **Procédé et système de communication sécurisée RFID entre un lecteur bruité et un objet communicant**

(30) Priorité: 09.10.2009 FR 0957085
(71) Demandeur: Commissariat à l'Énergie Atomique et aux Énergies Alternatives, 75015 Paris (FR)
(72) Inventeur: Savry, Olivier, 38360, SASSENAGE (FR)
(74) Mandataire: Ilgart, Jean-Christophe

(57) **Abrégé**

Procédé de communication entre un lecteur bruité de type RFID (100) et un objet communicant de type RFID, comportant un procédé d'authentification du lecteur bruité mis en oeuvre entre le lecteur bruité et l'objet communiquant préalablement à une transmission de données de l'objet communiquant au lecteur bruité, ladite transmission de données étant conditionnée par une authentification valide du lecteur bruité par l'objet communicant, et dans lequel le procédé d'authentification est mis en oeuvre simultanément à un procédé d'anticollision entre le lecteur bruité et au moins l'objet communicant.

## Description

### DOMAINE TECHNIQUE

L'invention concerne le domaine des communications, ou télétransmissions, de type RFID (Identification par Radio Fréquences) entre des objets communicants portatifs (cartes sans contact, billets, étiquettes, ...) et un lecteur bruité, par exemple liés par un couplage inductif. L'invention s'applique notamment aux domaines de l'identification d'objets, du contrôle d'accès ou encore du péage par des dispositifs (tels que des cartes) sans contact.

### ÉTAT DE LA TECHNIQUE ANTÉRIEURE

Les étiquettes et cartes sans contact de type RFID sont des dispositifs qui, lors de communications avec un lecteur de cartes et/ou d'étiquettes RFID, sont télé-alimentés par le lecteur et qui ont à leur disposition un faible budget énergétique pour fonctionner. Ils ne peuvent par conséquent mettre en oeuvre, dans un temps raisonnable, que des calculs simples. Il n'est donc pas possible pour ces cartes ou étiquettes RFID de mettre en oeuvre des algorithmes de cryptage sophistiqués qui leur permettraient d'assurer une bonne sécurité de leurs communications avec le lecteur RFID sans augmenter considérablement la complexité de ces cartes sans contact ou étiquettes RFID ainsi que le budget énergétique qui leur est nécessaire. Les communications entre un lecteur RFID et une étiquette RFID ou une carte sans contact sont donc généralement non sécurisées. L'absence de sécurité dans ces communications a pour conséquence qu'une personne mal intentionnée peut facilement écouter la transaction ou l'échange de données entre un lecteur et une étiquette ou une carte sans contact. Par exemple, une telle écoute du code d'identification unique (UID) ou du code du produit électronique (EPC) émis par l'étiquette RFID ou la carte sans contact au lecteur peut permettre ensuite de suivre cette étiquette ou cette carte, et donc la personne qui la porte, compromettant ainsi la sauvegarde de sa vie privée.

Pour résoudre ce problème de sécurité lié à l'écoute de communications entre un lecteur RFID et une étiquette ou une carte sans contact, le document WO 2006/035178 A1 propose une solution consistant à sécuriser les communications entre le lecteur et l'étiquette ou la carte sans contact. Ce procédé fait appel à un lecteur particulier appelé « lecteur bruité ». Contrairement à un lecteur classique RFID émettant une porteuse d'amplitude constante pour alimenter l'étiquette ou la carte lors de la réponse de cette étiquette ou de cette carte au lecteur, un lecteur bruité émet, lors d'une réponse de l'étiquette ou de la carte interrogée, une porteuse modulée par du bruit permettant de masquer la modulation de charge réalisée par l'étiquette ou la carte pour répondre au lecteur. Ainsi, une sonde espion disposée dans le champ de communication du lecteur avec l'étiquette ou la carte ne verra alors que du bruit et ne pourra pas comprendre le message envoyé par l'étiquette ou la carte alors que le lecteur, connaissant le bruit émis à travers la porteuse, sera capable de soustraire le bruit du message envoyé par l'étiquette ou la carte pour retrouver le message d'origine de l'étiquette ou de la carte.

Bien que l'utilisation du lecteur bruité soit efficace contre l'espionnage des communications entre le lecteur et un objet communicant RFID, n'importe qui peut toutefois initier une communication avec l'étiquette RFID ou la carte sans contact en utilisant un lecteur classique non bruité et, en émettant les mêmes commandes que celles émises par le lecteur bruité, obtenir des réponses de l'étiquette ou de la carte, et notamment des données d'identification de l'étiquette ou de la carte sans contact que l'on cherchait à masquer par l'intermédiaire du bruit émis sur la porteuse par le lecteur bruité.

### EXPOSÉ DE L'INVENTION

Un but de la présente invention est de proposer un procédé de communication sécurisée entre un lecteur bruité de type RFID et un objet communicant RFID tel qu'une étiquette RFID ou une carte sans contact RFID, permettant notamment, en plus de sécuriser les données émises par l'objet communicant à destination du lecteur bruité, de sécuriser totalement le canal de communication entre le lecteur et l'objet communicant, c'est-à-dire permettant de sécuriser également les échanges de données depuis le lecteur vers l'étiquette ou la carte.

Pour cela, il est proposé un procédé de communication entre au moins un lecteur bruité de type RFID et au moins un objet communicant de type RFID, comportant au moins un procédé d'authentification du lecteur bruité mis en oeuvre entre le lecteur bruité et l'objet communiquant préalablement à une transmission de données de l'objet communiquant au lecteur bruité, ladite transmission de données étant conditionnée par une authentification valide du lecteur bruité par l'objet communicant.

On empêche ainsi qu'un lecteur non valide, c'est-à-dire un lecteur non autorisé tel que par exemple un lecteur non bruité, puisse demander des informations à l'objet communicant, tout en assurant la sécurité des échanges grâce au bruitage mis en oeuvre par le lecteur bruité qui empêche les écoutes des échanges entre le lecteur et l'objet communicant.

De plus, une telle authentification n'implique pas la mise en oeuvre de procédé de cryptage complexe, et donc n'impacte pas les ressources matérielles et le budget énergétique nécessaires à l'objet communicant. L'invention assure donc l'authentification du lecteur par l'objet communicant sans ajouter de nombreux composants logiques supplémentaires dans l'objet communicant ou le lecteur.

Le terme « objet communicant de type RFID » s'entend ici comme désignant tout type d'objet apte à communiquer par RFID avec un lecteur RFID, comme par exemple les étiquettes RFID ou les cartes sans contact de type RFID.

La transmission de données conditionnée par une authentification valide du lecteur bruité peut être une transmission de données d'identification de l'objet communicant.

Le procédé d'authentification peut être mis en oeuvre simultanément à un procédé d'anticollision entre le lecteur bruité et au moins l'objet communicant. Ainsi, la mise en oeuvre du procédé d'authentification n'a pas d'impact sur la durée totale d'une communication entre le lecteur bruité et l'objet communicant. De plus, par rapport à une mise en oeuvre séquentielle d'une authentification du lecteur et d'un procédé d'anticollision qui demande une durée de communication plus importante entre le lecteur et l'objet communicant, une mise en oeuvre simultanée du procédé d'authentification du lecteur bruitée et du procédé d'anticollision permet de réduire l'énergie nécessaire à cette authentification et ce procédé d'anticollision, étant donné notamment que la durée de communication entre le lecteur bruité et l'objet communicant est réduite.

Le procédé d'authentification peut comporter au moins les étapes de :
- génération d'un premier nombre pseudo-aléatoire à partir d'un générateur physique de nombres pseudo-aléatoires de l'objet communicant,
- masquage du premier nombre pseudo-aléatoire par au moins une fonction de chiffrement bijective,
- envoi, depuis l'objet communicant vers le lecteur bruité, du premier nombre pseudo-aléatoire masqué,
- démasquage du premier nombre pseudo-aléatoire par le lecteur bruité,
- génération d'un deuxième nombre pseudo-aléatoire à partir du premier nombre pseudo-aléatoire utilisé en tant que graine d'un générateur de nombres pseudo-aléatoires de l'objet communicant,
- génération d'un troisième nombre pseudo-aléatoire à partir du premier nombre pseudo-aléatoire utilisé en tant que graine d'un générateur de nombres pseudo-aléatoires du lecteur bruité similaire au générateur de nombres pseudo-aléatoires de l'objet communicant,
- envoi, depuis le lecteur bruité vers l'objet communicant, du troisième nombre pseudo-aléatoire,
- comparaison du deuxième nombre pseudo-aléatoire avec le troisième nombre pseudo-aléatoire par l'objet communicant, le lecteur bruité étant identifié comme valide lorsque le deuxième nombre pseudo-aléatoire est similaire au troisième nombre pseudo-aléatoire.

Le procédé d'authentification peut donc faire appel à des générateurs de nombres pseudo-aléatoires déjà présents dans le lecteur bruité et l'objet communicant et utilisés lors du procédé de communication entre le lecteur et l'objet communicant, par exemple lors d'une phase d'anticollision du procédé de communication. Par rapport à un protocole de communication standard entre un lecteur bruité et un objet communicant RFID, le procédé d'authentification fait donc appel à une fonction supplémentaire de masquage/démasquage et à des registres permettant la comparaison des nombres pseudo-aléatoires générés par l'objet communicant et par le lecteur, ce qui est négligeable en terme de complexité pour l'objet communicant et le lecteur.

De plus, le premier nombre pseudo-aléatoire peut être généré par un générateur physique de nombres pseudo-aléatoires de l'objet communicant, également appelé TRNG (« True Random Number Generator » en anglais), permettant de générer le premier nombre pseudo-aléatoire par exemple à partir du bruit thermique d'un composant (résistance, diode, ...), d'une désynchronisation entre deux horloges ou encore à partir de la valeur de sortie d'une cellule SRAM juste après son initialisation, sa sortie prenant aléatoirement la valeur 0 ou 1 (voir par exemple le document « RFID Noisy Reader How to Prevent from Eavesdropping on the Communication ? » de 0. Savry et al., CHES 2007, LNCS 4727, pages 334-345, 2007).

La fonction de chiffrement bijective utilisée pour masquer le premier nombre pseudo-aléatoire peut comporter au moins une opération OU Exclusif réalisée entre le premier nombre pseudo-aléatoire et une clé secrète connue de l'objet communicant et du lecteur bruité, et le démasquage du premier nombre pseudo-aléatoire par le lecteur bruité peut comporter au moins une opération OU Exclusif réalisée entre le premier nombre pseudo-aléatoire masqué et la clé secrète.

Les premier, deuxième et troisième nombres pseudo-aléatoires peuvent être des nombres binaires d'au moins 16 bits.

Le procédé de communication peut comporter en outre, avant l'étape de génération du premier nombre pseudo-aléatoire, une étape de sélection, parmi plusieurs objets communicants se trouvant dans le champ de communication du lecteur bruité, d'une partie des objets communicants, et une étape d'attribution d'intervalles de temps de communication distincts à chacun des objets communicants sélectionnés.

L'étape de génération du premier nombre pseudo-aléatoire peut comporter la génération d'un nombre pseudo-aléatoire par le générateur physique de nombres pseudo-aléatoires puis la génération du premier nombre pseudo-aléatoire à partir dudit nombre pseudo-aléatoire utilisé en tant que graine par le générateur de nombres pseudo-aléatoires de l'objet communicant. Ainsi, le premier nombre pseudo-aléatoire peut être obtenu directement en sortie du générateur physique de nombres pseudo-aléatoires, ou bien obtenu en générant au préalable un nombre pseudo-aléatoire par le générateur physique de nombres pseudo-aléatoires qui est ensuite utilisé en tant que graine par le générateur de nombres pseudo-aléatoires de l'objet communicant, ce qui renforce encore plus, d'un point de vue statistique, le caractère pseudo-aléatoire du premier nombre pseudo-aléatoire.

Il est également proposé un lecteur bruité de type RFID, comportant des moyens de mise en oeuvre d'un procédé de communication tel que décrit précédemment avec au moins un objet communicant de type RFID.

Il est également proposé un objet communicant de type RFID, comportant des moyens de mise en oeuvre d'un procédé de communication tel que décrit précédemment avec au moins un lecteur bruité de type RFID.

Ledit objet communicant peut comporter au moins une étiquette RFID et/ou au moins une carte sans contact de type RFID.

Enfin, il est également proposé un système de communication RFID comportant au moins un lecteur bruité de type RFID et au moins un objet communicant de type RFID, dans lequel le lecteur bruité et l'objet communicant comportent des moyens de mise en oeuvre d'un procédé d'authentification du lecteur bruité entre le lecteur bruité et l'objet communiquant préalablement à une transmission de données de l'objet communiquant au lecteur bruité, ladite transmission des données étant conditionnée par une authentification valide du lecteur bruité par l'objet communicant.

Le système de communication peut comporter en outre des moyens de mise en oeuvre d'un procédé d'anticollision entre le lecteur bruité et au moins l'objet communicant. Cette mise en oeuvre du procédé d'anticollision entre le lecteur bruité et au moins l'objet communicant peut être simultanée à la mise en oeuvre du procédé d'authentification du lecteur bruité.

Le système de communication peut comporter au moins :
- des moyens de génération d'un premier nombre pseudo-aléatoire à partir d'un générateur physique de nombres pseudo-aléatoires de l'objet communicant,
- des moyens de masquage du premier nombre pseudo-aléatoire par au moins une fonction de chiffrement bijective,
- des moyens d'envoi, depuis l'objet communicant vers le lecteur bruité, du premier nombre pseudo-aléatoire masqué,
- des moyens de démasquage du premier nombre pseudo-aléatoire par le lecteur bruité,
- des moyens de génération d'un deuxième nombre pseudo-aléatoire à partir du premier nombre pseudo-aléatoire utilisé en tant que graine d'un générateur de nombres pseudo-aléatoires de l'objet communicant,
- des moyens de génération d'un troisième nombre pseudo-aléatoire à partir du premier nombre pseudo-aléatoire utilisé en tant que graine d'un générateur de nombres pseudo-aléatoires du lecteur bruité similaire au générateur de nombres pseudo-aléatoires de l'objet communicant,
- des moyens d'envoi, depuis le lecteur bruité vers l'objet communicant, du troisième nombre pseudo-aléatoire,
- des moyens de comparaison du deuxième nombre pseudo-aléatoire avec le troisième nombre pseudo-aléatoire par l'objet communicant, le lecteur

bruité pouvant être identifié comme valide lorsque le deuxième nombre pseudo-aléatoire est similaire au troisième nombre pseudo-aléatoire.

Les moyens de mise en oeuvre du procédé d'authentification peuvent être réalisés sous la forme d'une unité de commande pilotant les différents éléments (registres, générateurs de nombres pseudo-aléatoires, ...) du lecteur ou de l'objet communicant.

Les moyens de masquage peuvent comporter au moins un opérateur OU Exclusif apte à réaliser une opération OU Exclusif entre le premier nombre pseudo-aléatoire et une clé secrète connue de l'objet communicant et du lecteur bruité, et les moyens de démasquage peuvent comporter au moins un opérateur OU Exclusif apte à réaliser une opération OU Exclusif entre le premier nombre pseudo-aléatoire masqué et la clé secrète.

Le système de communication peut comporter en outre des moyens de sélection, parmi plusieurs objets communicants se trouvant dans le champ de communication du lecteur bruité, d'une partie des objets communicants, et des moyens d'attribution d'intervalles de temps de communication distincts à chacun des objets communicants sélectionnés.

Les moyens de génération du premier nombre pseudo-aléatoire peuvent comporter des moyens de génération d'un nombre pseudo-aléatoire par le générateur physique de nombres pseudo-aléatoires et des moyens de génération du premier nombre pseudo-aléatoire à partir dudit nombre pseudo-aléatoire utilisé en tant que graine par le générateur de nombres pseudo-aléatoires de l'objet communicant.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels .
- la figure 1 représente un schéma d'un lecteur bruité RFID, objet de la présente invention, réalisé selon un mode de réalisation particulier et apte à mettre en oeuvre un procédé de communication sécurisée avec un objet communicant RFID, également objet de la présente invention,
- la figure 2 représente un schéma d'un objet communicant RFID, objet de la présente invention, réalisé selon un mode de réalisation particulier et apte à mettre un oeuvre un procédé de communication sécurisée avec un lecteur bruité RFID, également objet de la présente invention,
- la figure 3 représente des étapes d'un procédé de communication sécurisée entre un lecteur bruité RFID et un objet communicant RFID, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

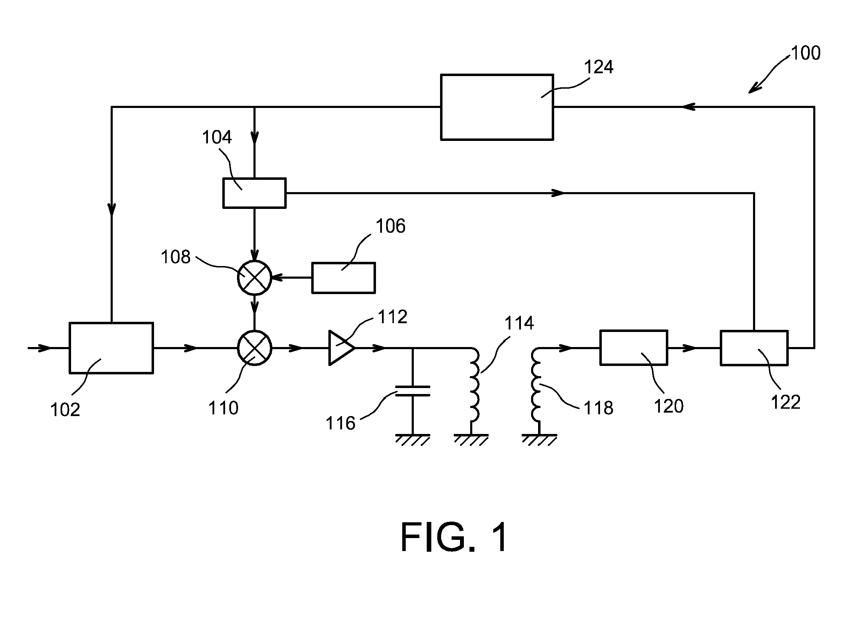

On se réfère tout d'abord à la figure 1 qui représente schématiquement un lecteur bruité 100 de type RFID selon un mode de réalisation particulier et apte à mettre en oeuvre un procédé de communication sécurisée avec un objet communicant RFID tel qu'une étiquette RFID ou une carte sans contact RFID.

Le lecteur RFID bruité 100 comporte une partie destinée à l'émission de données formée notamment par des moyens 102 de mise en forme des signaux destinés à être émis par le lecteur 100. Ces moyens 102 forment ici une partie numérique de mise en forme de bits à transmettre. Le lecteur bruité 100 comporte également des moyens 104 permettant de générer un bruit destiné à moduler la porteuse qui sera émise par le lecteur 100 pour communiquer avec un objet communicant interrogé. Ces moyens 104 comportent notamment un ou plusieurs générateurs de nombres pseudo-aléatoires utilisés pour générer le bruit. Ce ou ces générateurs de nombres pseudo-aléatoires serviront également lors de la phase d'authentification du lecteur 100 avec un objet communicant RFID qui sera détaillée plus loin. Le lecteur 100 comporte également des moyens 106 de génération d'une porteuse dont la fréquence est par exemple égale à environ 13,56 MHz. La porteuse obtenue en sortie des moyens 106 est modulée par le bruit généré par les moyens 104 par l'intermédiaire d'un multiplicateur 108. Les bits à transmettre obtenus en sortie des moyens 102 sont alors modulés par la porteuse bruitée par un multiplicateur 110. Ce signal à émettre est ensuite amplifié par des moyens d'amplification 112 et émis par une antenne d'émission 114. La partie d'émission du lecteur bruité 100 comporte également une capacité d'accord 116 reliée en parallèle à l'antenne d'émission 114.

Le lecteur RFID bruité 100 comporte également une partie destinée à la réception de données émises par des objets communicants RFID. Cette partie destinée à la réception de données est formée au moins par une antenne de réception 118 (de couplage mutuel nul avec l'antenne d'émission 114) reliée à des moyens de calibration 120 ainsi qu'à des moyens de démodulation 122. Le bruit généré par les moyens 104 est envoyé en entrée des moyens de démodulation 122 afin que le lecteur 100 puisse retrouver les données non bruitées envoyées par l'étiquette RFID ou la carte sans contact en soustrayant ce bruit au signal reçu.

Le lecteur bruité 100 comporte également des moyens 124, reliés notamment entre la sortie des moyens de démodulation 122 et les moyens 102 de mise en forme des signaux destinés à être émis par le lecteur 100, permettant de mettre un oeuvre un procédé d'authentification entre le lecteur 100 et une étiquette RFID ou une carte sans contact, qui sera détaillé plus loin. Les détails de réalisation d'un lecteur bruité standard, c'est-à-dire d'un lecteur bruité comportant les éléments 102 à 122 du lecteur bruité 100, sont décrits par exemple dans le document « RFID Noisy Reader - How to prevent from eavesdropping on the communication ? » de 0. Savry et al., CHES 2007, LNCS 4727, pages 334-345.

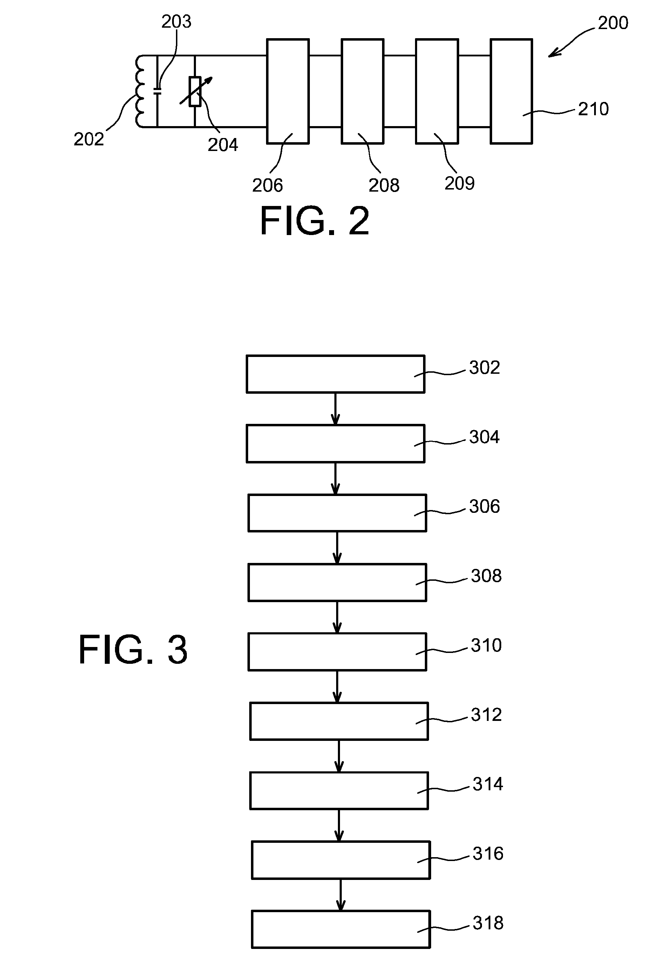

La figure 2 représente un exemple d'étiquette RFID 200 réalisée selon un mode de réalisation particulier et apte à mettre un ouvre un procédé de communication sécurisé avec le lecteur bruité 100.

L'étiquette RFID 200 comporte une antenne 202 reliée en parallèle à une capacité 203 d'accord de l'antenne, une charge variable 204, un redresseur 206, un régulateur de tension 208, des moyens 209 de modulation et de démodulation de signaux ainsi que des moyens 210 de traitement numérique de signaux reçus ou à émettre.

Le procédé de communication sécurisée mis en oeuvre entre le lecteur bruité 100 et l'étiquette RFID 200 consiste en ce que, parallèlement au bruitage réalisé par le lecteur 100 permettant de sécuriser les échanges de données entre le lecteur bruité 100 et l'étiquette 200 lorsque celle-ci envoie des informations au lecteur bruité 100, l'étiquette 200 réalise, préalablement à l'envoi des données au lecteur 100, une authentification du lecteur 100 afin de vérifier que celui-ci est bien un lecteur autorisé à communiquer avec elle. Cette vérification peut par exemple consister à vérifier que le lecteur 100 est bien un lecteur bruité.

Cette authentification du lecteur est ici réalisée pendant la phase dite « d'anticollision » pendant laquelle le lecteur 100 identifie toutes les étiquettes se trouvant dans son champ de communication. En effet, les systèmes RFID ne permettent pas la communication simultanée entre un lecteur et plusieurs étiquettes. Une séparation des communications entre le lecteur et chacune des étiquettes RFID est donc nécessaire afin d'éviter toute collision entre ces communications. On décrit ci-dessous une phase d'anticollision standard mise en oeuvre entre un lecteur RFID et une étiquette RFID standards.

L'inventaire des objets communicants RFID présents dans le champ de communication du lecteur RFID commence par l'envoi par le lecteur d'une commande, appelée « Select », permettant de déterminer quels types d'étiquettes doivent prendre part à la phase d'anticollision. Cette commande « Select » peut par exemple permettre de sélectionner des étiquettes ou cartes sans contact ayant une partie de leurs UID (ou EPC) identique.

Quand le lecteur a sélectionné un sous-ensemble d'étiquettes ou de cartes sans contact, le lecteur envoie alors une commande, appelée « Query », qui contient un paramètre Q compris entre 0 et 15 et qui définit 2^{Q}-1 intervalles de temps (« time slots » en anglais). Quand les étiquettes reçoivent la commande « Query », elles tirent ensuite chacune une valeur pseudo-aléatoire comprise entre 0 et 2^{Q}-1 (à partir d'un générateur de nombres pseudo-aléatoires inclus dans l'étiquette) qui détermine l'intervalle de temps dans lequel elles doivent répondre. Si une ou plusieurs étiquettes ont tiré la valeur 0, elles doivent répondre alors immédiatement en envoyant au lecteur un nombre aléatoire m codé sur 16 bits. Si une seule étiquette ou carte répond, cela signifie qu'il n'y a pas eu de collision. En réponse au nombre aléatoire m envoyé par l'étiquette ou la carte, le lecteur renvoie alors une commande d'acquittement « Ack » contenant ce nombre aléatoire. L'étiquette recevant la commande d'acquittement « Ack » envoie alors son code d'identification unique UID ou EPC, par exemple codé sur 96 ou 128 bits, au lecteur et sort de l'algorithme d'anticollision.

Après l'envoi du code d'identification par l'étiquette à laquelle le premier intervalle de temps à été attribué, ou après une collision de plusieurs étiquettes si ces étiquettes ont répondu simultanément au lecteur, le lecteur envoie une commande "QueryRep" abaissant la valeur du compteur d'intervalles de temps de toutes les étiquettes ou une commande "QueryAdjust" modifiant la valeur de Q en cas de collision.

On voit donc qu'il est possible, pour un lecteur espion non bruité, d'obtenir de la part d'une étiquette RFID ou d'une carte sans contact des informations confidentielles autorisant la traçabilité de l'étiquette ou de la carte, et donc de l'objet ou de la personne qui la porte. Ces informations, dans le cadre d'une étiquette électronique RFID du type définie dans les normes ISO 15693, ISO 18000-3 type C ou EPC, sont les identifiants uniques qui identifient chaque étiquette RFID ou chaque carte sans contact (codes UID ou EPC).

On décrit maintenant, en liaison avec la figure 3, le procédé d'authentification du lecteur bruité 100 réalisé entre le lecteur bruité 100 et l'étiquette RFID 200. Dans l'exemple décrit ci-dessous, cette phase d'authentification est mise en oeuvre simultanément à une phase d'anticollision.

De manière analogue à la phase d'anticollision standard précédemment décrite, le lecteur bruité 100 émet tout d'abord une commande « Select » permettant de déterminer quels types d'étiquettes doivent prendre part à l'anticollision et à la phase d'authentification (étape 302). Quand le lecteur a sélectionné un sous-ensemble d'étiquettes, dont fait partie l'étiquette 200, le lecteur bruité 100 envoie alors une commande « Query » (étape 304). En réponse à la commande « Query », l'étiquette 200 choisit de façon aléatoire, en tirant une valeur pseudo-aléatoire comprise entre 0 et 2^{Q}-1, l'intervalle de temps dans lequel elle va répondre (étape 306). L'étiquette 200 comporte, dans ses moyens 210 de traitement numérique, un générateur de nombres pseudo-aléatoires qui est similaire au générateur de nombres pseudo-aléatoires du lecteur bruité 100. Ainsi, à partir d'une même graine, ces générateurs similaires généreront des nombres pseudo-aléatoires similaires.

Une fois que l'intervalle de temps attribué à l'étiquette 200 est arrivé, autorisant ainsi l'étiquette 200 à communiquer avec le lecteur 100, l'étiquette 200 tire alors un nouveau nombre pseudo-aléatoire g codé sur n bits, n étant au moins égal à 16 bits, à partir d'un générateur physique de nombres pseudo-aléatoires (étape 308). Le nombre de bits n conditionne la sécurité du procédé d'authentification. Plus n sera grand, plus les attaques pour tenter d'espionner les communications entre le lecteur 100 et l'étiquette 200 seront longues. L'étiquette 200 communique alors au lecteur 100 ce nombre pseudo-aléatoire g de façon sécurisée, c'est-à-dire en masquant g par une fonction de chiffrement bijective (étape 310). Dans une variante, il est possible que le nombre pseudo-aléatoire g transmis au lecteur 100 ne soit pas le nombre pseudo-aléatoire obtenu en sortie du générateur physique de nombres pseudo-aléatoires, mais un nombre pseudo-aléatoire obtenu en sortie d'un générateur de nombres pseudo-aléatoires de l'étiquette 200 utilisant en tant que graine le nombre pseudo-aléatoire obtenu en sortie du générateur physique de nombres pseudo-aléatoires.

Dans cet exemple de réalisation, l'étiquette 200 réalise le masquage de g en transmettant au lecteur bruité 100 la valeur (s XOR g), s étant un nombre codé sur n bits servant de clé secrète qui est également connue du lecteur bruité 100 (XOR étant l'opérateur OU Exclusif). La clé secrète s est donc difficile à retrouver car g est un nombre pseudo-aléatoire qui change pour chaque intervalle de temps. De plus, la valeur (s XOR g) conserve son caractère pseudo-aléatoire nécessaire au bon déroulement de l'algorithme d'anticollision, cette valeur étant doublement sécurisée en raison du bruit introduit par le lecteur bruité 100 dans la réponse de l'étiquette 200 au lecteur bruité 100.

A partir de la valeur (s XOR g) reçue, le lecteur 100 retrouve la valeur de g en réalisant l'opération inverse à l'opération de masquage, à savoir (s XOR g) XOR s = g (étape 312). A ce stade du procédé d'authentification, le lecteur 100 et l'étiquette 200 connaissent donc tous les deux les valeurs de s et g. Le lecteur 100 utilise alors le nombre pseudo-aléatoire g en tant que graine pour générer un nombre pseudo-aléatoire b à partir de son générateur de nombres pseudo-aléatoires. De même, l'étiquette 200 utilise le nombre pseudo-aléatoire g en tant que graine pour générer un nombre pseudo-aléatoire c à partir de son générateur de nombres pseudo-aléatoires (étape 314).

Le lecteur bruité 100 envoie alors le nombre pseudo-aléatoire b à l'étiquette 200 (étape 316). L'étiquette 200 compare ensuite le nombre pseudo-aléatoire b envoyé par le lecteur 100 avec le nombre pseudo-aléatoire c obtenu par l'étiquette 200 (étape 318). Cette comparaison est par exemple mise en oeuvre en stockant les nombres pseudo-aléatoires b et c dans des registres puis en réalisant une comparaison bit à bit de ces deux nombres. Dans le cas présent, étant donné que l'étiquette 200 comporte un générateur de nombres pseudo-aléatoires similaire au générateur de nombres pseudo-aléatoires du lecteur 100, le nombre pseudo-aléatoire b obtenu par le lecteur bruité 100 est donc similaire au nombre pseudo-aléatoire c obtenu par l'étiquette 200. Ainsi, lorsque les deux nombres b et c sont identiques, cela signifie que le lecteur 100 est bien un lecteur de confiance et que l'étiquette 200 peut alors envoyer ses informations (code EPC ou UID) au lecteur 100. Si la comparaison réalisée par l'étiquette 200 aboutie au fait que les nombres sont différents, l'étiquette 200 n'envoie alors pas ces informations car un tel résultat signifie que le lecteur n'est pas un lecteur de confiance.

De manière analogue au procédé d'anticollision standard précédemment décrit, le lecteur 100 peut ensuite envoyer une commande "QueryRep" abaissant la valeur du compteur d'intervalles de temps de toutes les étiquettes ou une commande "QueryAdjust" changeant la valeur de Q.

Les étiquettes RFID et les cartes sans contact standards possèdent déjà dans leur mémoire des mots de passe d'accès à la mémoire en écriture ou de destruction de l'étiquette (couramment appelé « kill password ») stockés dans des registres. La gestion de la clé secrète s par l'étiquette 200 peut donc être réalisée à partir de registres existants.

Dans une variante du procédé d'authentification précédemment décrit, il est possible que ce ne soit pas la graine g qui soit envoyée de l'étiquette 200 au lecteur 100, mais que ce soit la clé secrète s qui soit envoyée au lecteur 100 (la graine a alors une valeur fixe et est connue du lecteur 100 et de l'étiquette 200).

Ainsi, on voit que pour mettre en oeuvre le procédé d'authentification du lecteur, le lecteur bruité RFID 100 comporte donc, par rapport à un lecteur bruité RFID standard, des moyens 124 permettant de réaliser un démasquage du nombre pseudo-aléatoire g en réalisant l'opération (s XOR g) XOR s, ce qui implique que les moyens 124 comportent au moins un opérateur OU Exclusif, ainsi que quelques registres supplémentaires pour mémoriser les nombres pseudo-aléatoires utilisés lors de l'authentification du lecteur (ces nombres pseudo-aléatoires étant générés par exemple par un ou plusieurs générateurs de nombres pseudo-aléatoires présents dans les moyens 104).

De manière analogue, on voit que pour mettre en oeuvre le procédé d'authentification du lecteur, l'objet communicant 200 comporte donc, par rapport à un objet communicant RFID standard, des moyens 210 de traitement numérique permettant de réaliser un masquage du nombre pseudo-aléatoire g, impliquant que les moyens 210 comportent au moins un opérateur OU Exclusif, ainsi que quelques registres supplémentaires pour mémoriser les nombres aléatoires utilisés lors de l'authentification du lecteur (les nombres pseudo-aléatoires générés étant par exemple obtenus par un ou plusieurs générateurs de nombres pseudo-aléatoires présents dans les moyens numériques 210).

On voit donc que ce procédé d'authentification permet de d'améliorer considérablement la sécurité des communications entre un lecteur bruité et un objet communicant sans complexifier le lecteur ou l'objet communicant, les étapes mises en oeuvre lors de l'authentification faisant appel en grande partie à des éléments matériels déjà présents dans un lecteur bruité standard et dans un objet communicant standard.

## Revendications

1. Procédé de communication entre au moins un lecteur bruité de type RFID (100) et au moins un objet communicant de type RFID (200), comportant au moins un procédé d'authentification du lecteur bruité (100) mis en oeuvre entre le lecteur bruité (100) et l'objet communiquant (200) préalablement à une transmission de données de l'objet communiquant (200) au lecteur bruité (100), ladite transmission de données étant conditionnée par une authentification valide du lecteur bruité (100) par l'objet communicant (200), et dans lequel le procédé d'authentification est mis en oeuvre simultanément à un procédé d'anticollision entre le lecteur bruité (100) et au moins l'objet communicant (200).

2. Procédé de communication selon la revendication 1, dans lequel la transmission de données conditionnée par une authentification valide du lecteur bruité (100) est une transmission de données d'identification de l'objet communicant (200).

3. Procédé de communication selon l'une des revendications précédentes, dans lequel le procédé d'authentification comporte au moins les étapes de :
- génération (308) d'un premier nombre pseudo-aléatoire à partir d'un générateur physique de nombres pseudo-aléatoires de l'objet communicant (200),
- masquage (310) du premier nombre pseudo-aléatoire par au moins une fonction de chiffrement bijective,
- envoi, depuis l'objet communicant (200) vers le lecteur bruité (100), du premier nombre pseudo-aléatoire masqué,
- démasquage (312) du premier nombre pseudo-aléatoire par le lecteur bruité (100),
- génération (314) d'un deuxième nombre pseudo-aléatoire à partir du premier nombre pseudo-aléatoire utilisé en tant que graine d'un générateur de nombres pseudo-aléatoires de l'objet communicant (200),
- génération (314) d'un troisième nombre pseudo-aléatoire à partir du premier nombre pseudo-aléatoire utilisé en tant que graine d'un générateur de nombres pseudo-aléatoires du lecteur bruité (100) similaire au générateur de nombres pseudo-aléatoires de l'objet communicant (200),
- envoi (316), depuis le lecteur bruité (100) vers l'objet communicant (200), du troisième nombre pseudo-aléatoire,
- comparaison (318) du deuxième nombre pseudo-aléatoire avec le troisième nombre pseudo-aléatoire par l'objet communicant (200), le lecteur bruité (100) étant identifié comme valide lorsque le deuxième nombre pseudo-aléatoire est similaire au troisième nombre pseudo-aléatoire.

4. Procédé de communication selon la revendication 3, dans lequel la fonction de chiffrement bijective utilisée pour masquer le premier nombre pseudo-aléatoire comporte au moins une opération OU Exclusif réalisée entre le premier nombre pseudo-aléatoire et une clé secrète connue de l'objet communicant (200) et du lecteur bruité (100), et dans lequel le démasquage du premier nombre pseudo-aléatoire par le lecteur bruité (100) comporte au moins une opération OU Exclusif réalisée entre le premier nombre pseudo-aléatoire masqué et la clé secrète.

5. Procédé de communication selon l'une des revendications 3 ou 4, dans lequel les premier, deuxième et troisième nombres pseudo-aléatoires sont des nombres binaires d'au moins 16 bits.

6. Procédé de communication selon l'une des revendications 3 à 5, comportant en outre, avant l'étape de génération du premier nombre pseudo-aléatoire, une étape (302) de sélection, parmi plusieurs objets communicants se trouvant dans le champ de communication du lecteur bruité (100), d'une partie des objets communicants, et une étape (304, 306) d'attribution d'intervalles de temps de communication distincts à chacun des objets communicants sélectionnés.

7. Procédé de communication selon l'une des revendications 3 à 6, dans lequel l'étape de génération du premier nombre pseudo-aléatoire comporte la génération d'un nombre pseudo-aléatoire par le générateur physique de nombres pseudo-aléatoires puis la génération du premier nombre pseudo-aléatoire à partir dudit nombre pseudo-aléatoire utilisé en tant que graine par le générateur de nombres pseudo-aléatoires de l'objet communicant (200).

8. Lecteur bruité (100) de type RFID, comportant des moyens (124) de mise en oeuvre d'un procédé de communication selon l'une des revendications 1 à 7 avec au moins un objet communicant (200) de type RFID.

9. Objet communicant (200) de type RFID, comportant des moyens de mise en oeuvre d'un procédé de communication selon l'une des revendications 1 à 7 avec au moins un lecteur bruité de type RFID (100).

10. Objet communicant (200) selon la revendication 9, ledit objet communicant (200) comportant au moins une étiquette RFID et/ou au moins une carte sans contact de type RFID.

11. Système de communication RFID comportant au moins un lecteur bruité (100) de type RFID et au moins un objet communicant (200) de type RFID, dans lequel le lecteur bruité (100) et l'objet communicant (200) comportent des moyens (124, 210) de mise en oeuvre d'un procédé d'authentification du lecteur bruité (100) entre le lecteur bruité (100) et l'objet communiquant (200) préalablement à une transmission de données de l'objet communiquant (200) au lecteur bruité (100), ladite transmission des données étant conditionnée par une authentification valide du lecteur bruité (100) par l'objet communicant (200), et des moyens de mise en oeuvre d'un procédé d'anticollision entre le lecteur bruité (100) et au moins l'objet communicant (200) simultanément au procédé d'authentification du lecteur bruité (100).

12. Système de communication selon la revendication 11, comportant au moins :
- des moyens de génération d'un premier nombre pseudo-aléatoire à partir d'un générateur physique de nombres pseudo-aléatoires de l'objet communicant (200),
- des moyens de masquage du premier nombre pseudo-aléatoire par au moins une fonction de chiffrement bijective,
- des moyens d'envoi, depuis l'objet communicant (200) vers le lecteur bruité (100), du premier nombre pseudo-aléatoire masqué,
- des moyens de démasquage du premier nombre pseudo-aléatoire par le lecteur bruité (100),
- des moyens de génération d'un deuxième nombre pseudo-aléatoire à partir du premier nombre pseudo-aléatoire utilisé en tant que graine d'un générateur de nombres pseudo-aléatoires de l'objet communicant (200),
- des moyens de génération d'un troisième nombre pseudo-aléatoire à partir du premier nombre pseudo-aléatoire utilisé en tant que graine d'un générateur de nombres pseudo-aléatoires (104) du lecteur bruité (100) similaire au générateur de nombres pseudo-aléatoires de l'objet communicant (200),
- des moyens d'envoi, depuis le lecteur bruité (100) vers l'objet communicant (200), du troisième nombre pseudo-aléatoire,
- des moyens de comparaison du deuxième nombre pseudo-aléatoire avec le troisième nombre pseudo-aléatoire par l'objet communicant (200), le lecteur bruité (100) étant identifié comme valide lorsque le deuxième nombre pseudo-aléatoire est similaire au troisième nombre pseudo-aléatoire.

13. Système de communication selon la revendication 12, dans lequel les moyens de masquage comportent au moins un opérateur OU Exclusif apte à réaliser une opération OU Exclusif entre le premier nombre pseudo-aléatoire et une clé secrète connue de l'objet communicant (200) et du lecteur bruité (100), et dans lequel les moyens de démasquage comportent au moins un opérateur OU Exclusif apte à réaliser une opération OU Exclusif entre le premier nombre pseudo-aléatoire masqué et la clé secrète.

14. Système de communication selon l'une des revendications 12 ou 13, comportant en outre des moyens de sélection, parmi plusieurs objets communicants se trouvant dans le champ de communication du lecteur bruité, d'une partie des objets communicants, et des moyens d'attribution d'intervalles de temps de communication distincts à chacun des objets communicants sélectionnés.

15. Système de communication selon l'une des revendications 12 à 14, dans lequel les moyens de génération du premier nombre pseudo-aléatoire comporte des moyens de génération d'un nombre pseudo-aléatoire par le générateur physique de nombres pseudo-aléatoires et des moyens de génération du premier nombre pseudo-aléatoire à partir dudit nombre pseudo-aléatoire utilisé en tant que graine par le générateur de nombres pseudo-aléatoires de l'objet communicant (200).
